# EUROPÄISCHE PATENTSCHRIFT

(11) **EP 3 258 131 B1**
(45) Veröffentlichungstag und Bekanntmachung des Hinweises auf die Patenterteilung: **06.05.2020**
(21) Anmeldenummer: 17162960.3
(22) Anmeldetag: 27.03.2017
(51) Int. Cl.: F16F 13/10

(54) **HYDROLAGER**
HYDRAULIC SUPPORT
SUPPORT HYDRAULIQUE

(30) Priorität: 15.06.2016 DE 102016210688
(43) Veröffentlichungstag der Anmeldung: 20.12.2017
(73) Patentinhaber: ContiTech Vibration Control GmbH, 30165 Hannover (DE)
(72) Erfinder: Werhahn, Max, 30449 Hannover (DE); Genderjahn, Robert, 30625 Hannover (DE)
(74) Vertreter: Finger, Karsten

(56) Entgegenhaltungen:
- WO-A1-2015/197215
- WO-A1-2015/197391
- WO-A1-2016/028465
- DE-C2- 3 241 254

## Beschreibung

Die Erfindung betrifft ein Hydrolager gemäß dem Oberbegriff des Anspruchs 1, und ein Kraftfahrzeug gemäß Anspruch 13 mit einem derartigen Hydrolager.

Zur Isolation von Schwingungen sind verschiedene Arten und Ausführungen von Lagern bekannt. Zu diesen gehören die sog. Hydrolager oder auch Hydrauliklager. Sie dienen zur elastischen Abstützung von Aggregaten, insbesondere von Kraftfahrzeugmotoren. Mit Hilfe derartiger z. B. zwischen einem Motor und einem Chassis eines Kraftfahrzeugs angeordneter Hydrolager soll verhindert werden, dass sich Motor-Vibrationen auf das Fahrzeuggestell übertragen. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen soll, um entstehende Schwingungen über einen möglichst breiten Frequenzbereich möglichst wirkungsvoll zu isolieren.

Bei einem Hydrolager kann eine Flüssigkeit wie z.B. eine Hydraulikflüssigkeit zwischen einer Arbeitskammer und einer Ausgleichkammer über einen Drosselkanal hin und her bewegt werden. Eine Drosseleinheit trennt das Flüssigkeitsvolumen zwischen der Arbeitskammer und der Ausgleichskammer und bildet den Drosselkanal aus, der die Arbeitskammer und die Ausgleichskammer verbindet. Da der Drosselkanal einen Strömungswiderstand darstellt, können Schwingungen, welche über eine Tragfeder wie üblicherweise ein Elastomerelement auf die Arbeitskammer wirken, durch die Flüssigkeitsbewegungen durch den Drosselkanal hindurch gedämpft werden. Hierbei werden Schwingungen bis üblicherweise ca. 5 Hz durch die relativ große Steifigkeit der Tragfeder aufgenommen. Niederfrequente Schwingungen zwischen üblicherweise 5 Hz bis 20 Hz werden durch das Zusammenwirken der beiden Hydraulikkammern über den Drosselkanal gedämpft.

Es lassen sich verschiedene Arten von Hydrolagern unterscheiden:
Sog. konventionelle Hydrolager weisen den zuvor beschriebenen Aufbau und die hiermit verbundene Wirkungsweise auf, indem üblicherweise die Innenseite der elastischen Tragfeder und die eine Seite der Drosseleinheit die Arbeitskammer und eine elastische Rollmembran und die gegenüberliegende Seite der Drosseleinheit die Ausgleichkammer bilden. Die elastische Rollmembran führt zu einem variablen Volumen der Ausgleichskammer, so dass es hierdurch der üblicherweise inkompressiblen Flüssigkeit ermöglicht wird, aus der Arbeitskammer entweichen zu können. Alternativ oder zusätzlich kann auch eine elastische Entkopplungsmembran vorhanden sein, die einen elastischen Druckausgleich zwischen den beiden Hydraulikkammern ermöglichen kann. Bewegliche Teile sind außer der Elastizität der Tragfeder, der Rollmembran und bzw. oder der Entkopplungsmembran bei konventionellen Hydrolager üblicherweise nicht vorhanden.

Sog. schaltbare Hydrolager weisen grundsätzlich den gleichen Aufbau und die gleiche Wirkungsweise wie konventionelle Hydrolager auf. Zusätzlich zum Drosselkanal ist bei schaltbaren Hydrolagern jedoch ein Bypasskanal vorhanden, dessen Durchfluss schaltbar geöffnet und geschlossen werden kann. Alternativ kann auch ein Kanal zur Entlüftung einer Luftkammer unterhalb der Entkopplungsmembran schaltbar geöffnet und geschlossen werden. In beiden Fällen können durch das Öffnen bzw. Verschließen des jeweiligen Kanals zwei unterschiedliche Kennlinienverläufe der Steifigkeits- und Dämpfungscharakteristika des Lagers gewählt werden, so dass das Lager zwischen "weich" und "hart" geschaltet werden kann. Mit anderen Worten kann auf diese Art und Weise in bestimmten Situationen eine andere Steifigkeit des schaltbaren Hydrolagers eingestellt werden als im übrigen Betrieb. Diese Schaltfunktion kann durch einen elektromagnetischen Aktor ausgeführt werden.

Sog. steuerbare oder auch aktive Hydrolager entsprechen ebenfalls grundsätzlich dem Aufbau und der Wirkungsweise von konventionellen Hydrolagern, weisen jedoch eine steuerbare Möglichkeit auf, das Volumen der Arbeitskammer stufenlos zu verändern. Auf diese Weise kann aktiv auf das Isolationsverhalten des Hydrolagers eingewirkt werden. Die Steuerbarkeit wird üblicherweise über einen linear wirkenden elektromagnetischen Aktor erreicht, welcher eine Steuermembran z.B. über einen Kolben gegenüber der Arbeitskammer bewegen kann. Die Steuermembran bildet dabei einen Teil der Wandung der Arbeitskammer, so dass sich über die Bewegung der Steuermembran das Hydraulikvolumen der Arbeitskammer verändern lässt. Durch eine Ansteuerung des Aktors und des entsprechenden Einwirkens auf die Steuermembran kann eine Absenkung der dynamischen Federrate des Hydrolagers im Bereich der hochfrequenten Schwingungen bewirkt werden.

Bei den steuerbaren bzw. aktiven Hydrolagern lässt sich zwischen konventionellen steuerbaren Hydrolagern und invertierten steuerbaren Hydrolagern unterscheiden. Bei den konventionellen steuerbaren Hydrolagern drückt das Fluid direkt von der Seite der Arbeitskammer auf die Membran, die der Arbeitskammer zugewandt ist, d.h. üblicherweise von oben von der Seite der Tragfeder her. Bei invertierten steuerbaren Hydrolagern drückt die Membran von der Seite der Ausgleichskammer bzw. von der Seite des Drosselkanals auf die Membran, d.h. üblicherweise von unten von der Seite des Aktors her. In diesem Fall befindet sich üblicherweise ein konstruktionsbedingt geschlossenes Luftvolumen hinter der Membran, welches über den Stößel, welcher die Steuermembran mit dem Aktor verbindet, mit dem Aktorvolumen zur Entlüftung verbunden ist. Das Aktorvolumen seinerseits kann zur Entlüftung mit der Umgebung verbunden sein.

Alle zuvor beschriebenen Arten von Hydrolagern können als Motorlager eingesetzt werden.

Als elektromagnetischer Aktor können für derartige Hydrolager verschiedenen Bauformen und Wirkungsweisen verwendet werden. Beispielsweise ist aus der Druckschrift WO 2015 197 390 A1 ein elektromagnetischer Aktor für ein Hydrolager bekannt, der einen Stator und einen zu dem Stator beweglichen Anker aufweist. Der Stator weist ein Paar von Permanentmagneten und eine Spule auf. Der Stator weist ferner ein Leitelement aus ferromagnetischem Material auf, wobei das Leitelement die Permanentmagnete und bzw. oder die Spule übergreift. Der Anker bildet in der Richtung der Längsachse ein Joch aus ferromagnetischem Material für das Leitelement aus. Die Richtungen der Magnetfelder der Permanentmagnete sind in Querrichtung bzw. in radialer Richtung ausgerichtet und eine Richtung des Magnetfeldes der Spule ist in Richtung der Längsachse ausgerichtet.

Wird der elektromagnetische Aktor der Druckschrift WO 2015 197 390 A1 zylindrisch ausgeführt, so müssen als Permanentmagnete radial magnetisierte Ringe verwendet werden, d.h. ringförmige Permanentmagnete, deren einer Pol radial nach innen und deren anderer Pol radial nach außen orientiert ist. Um diese herstellen zu können, kann u.a. eine starke Magnetisierung von radial innen erfolgen. Hierzu kann einerseits ein entsprechend starker Magnet verwendet werden, der eine entsprechende Größe und insbesondere einen entsprechend großen Außendurchmesser aufweist. Da dieser Magnet bei der Herstellung radial innerhalb des herzustellenden Permanentmagneten aufgenommen werden muss, ist der minimale Durchmesser der radial zu magnetisierenden Ringe begrenzt. Somit wird die minimale radiale Baugröße eines Hydrolagers mit einem elektromagnetischen Aktor gemäß der WO 2015 197 390 A1 durch die Baugröße des elektromagnetischen Aktors festgelegt, dessen ringförmige Permanentmagnete nicht radial kleiner ausgebildet sein können als der radiale Außendurchmesser desjenigen Magneten, der zu ihrer Herstellung verwendet wird.

Alternativ kann das Magnetfeld zur Herstellung radial magnetisierter Ringe auch z.B. von außen über eine Spule erzeugt werden. Dieses Magnetfeld muss allerdings eine gewisse magnetische Flussdichte durch den zu magnetisierenden Ringmagnet leiten können. Damit das möglich ist, muss das Magnetfeld aus dem Inneren des zu magnetisierenden Ringmagneten abgeleitet werden. Hierzu kann ein leitfähiges Material in den zu magnetisierenden Ringmagneten eingebracht werden. Dieses muss ein gewisses Volumen aufweisen, da das Material sonst in Sättigung geht und der benötigte magnetische Fluss zur Herstellung radial magnetisierter Ringe nicht erreicht werden kann. Daher ist auch bei dieser Art der Herstellung radial magnetisierter Ringe deren minimaler Durchmesser herstellungsbedingt nach unten begrenzt.

Eine Aufgabe der vorliegenden Erfindung ist es, ein Hydrolager der eingangs beschriebenen Art bereitzustellen, welches radial kleiner aufgebaut werden kann. Zusätzlich oder alternativ soll ein Hydrolager günstiger hergestellt werden können als bekannt. Zusätzlich oder alternativ soll ein Hydrolager leichter ausgebildet werden können als bisher bekannt.

Die vorliegende Aufgabe wird durch ein Hydrolager mit den Merkmalen des Anspruchs 1 und durch ein Kraftfahrzeug mit den Merkmalen des Anspruchs 13 gelöst.

Die vorliegende Erfindung betrifft somit ein Hydrolager mit einem elektromagnetischen Linearaktor mit einem Stator und mit einem zu dem Stator beweglichen Anker. Der Stator weist mindestens einen Permanentmagneten und mindestens eine Spule auf. Der Stator weist ferner ein Leitelement aus ferromagnetischem Material auf, wobei das Leitelement den mindestens einen Permanentmagneten und bzw. oder die mindestens eine Spule übergreift. Der Anker bildet in der Richtung der Längsachse ein Joch aus ferromagnetischem Material für das Leitelement aus. Ein derartiger elektromagnetischer Linearaktor ist aus der Druckschrift WO 2015 197 390 A1 bekannt, wobei dort als Permanentmagnete radial magnetisierte Ringe verwendet werden.

Unter der Richtung der Längsachse ist die Richtung der Längsachse des Linearaktors zu verstehen, die somit auch die Richtung der Längsachse des Stators und des Ankers ist.

Das erfindungsgemäße Hydrolager ist dadurch gekennzeichnet, dass der mindestens eine Permanentmagnet zumindest im Wesentlichen, vorzugsweise vollständig, in der Richtung der Längsachse magnetisiert ist. Mit anderen Worten wird gegenüber der radialen Richtung der Magnetisierung gemäß der Druckschrift WO 2015 197 390 A1 erfindungsgemäß die Magnetisierung axial, d.h. in der Richtung der Längsachse ausgeführt.

Auf diese Weise können Permanentmagnete verwendet werden, welche bei ihrer Herstellung in der Richtung der Längsachse von oben und unten magnetisiert werden. Hierdurch gibt es keine herstellungsbedingten Randbedingungen, die den radialen Durchmesser der axialmagnetisierten Magnetringe beschränken, so dass diese mit geringeren radialen Durchmessern als radialmagnetisierte Magnetringe hergestellt werden können. Entsprechend kann auch der elektromagnetische Linearaktor einen geringeren radialen Durchmesser aufweisen als bisher bekannt. Dies kann auch zu einem geringeren Gewicht des elektromagnetischen Linearaktors führen.

Diese Art der Magnetisierung bei der Herstellung kann auch einfacher und damit kostengünstiger erfolgen, so dass die Permanentmagnete und damit auch der elektromagnetische Linearaktor günstiger hergestellt werden können.

Bezüglich einer grundlegenden Wirkungsweise eines elektromagnetischen Linearaktors wird auf die Druckschrift WO 2015 197 390 A1 verwiesen. Bei dem elektromagnetischen Linearaktor handelt es sich deshalb um ein Reluktanz-Linearaktor.

Gemäß einem Aspekt der vorliegenden Erfindung weist der elektromagnetische Linearaktor einen in der Richtung der Längsachse unteren Permanentmagneten, einen in der Richtung der Längsachse oberen Permanentmagneten und ein Zwischenelement aus ferromagnetischem Material auf, welches in der Richtung der Längsachse zwischen den beiden Permanentmagneten angeordnet ist. Hierdurch kann ein Pol in der Richtung der Längsachse zwischen den beiden Permanentmagneten angeordnet werden, so dass über diesen der magnetische Fluss zwischen Stator und Anker ermöglicht werden kann. Gemäß einem weiteren Aspekt der vorliegenden Erfindung weist das Zwischenelement eine der Spule zugewandte Aussparung, vorzugsweise in Form einer dreieckigen Einkerbung, auf, welche ausgebildet ist, den magnetischen Fluss wenigstens eines Permanentmagneten, vorzugsweise beider Permanentmagneten, zwischen der axialen Richtung der Längsachse und der radialen Richtung bzw. Querrichtung senkrecht zur Richtung der Längsachse zumindest teilweise umzulenken. Diese Aussparung kann luftgefüllt sein und bzw. oder mit einem Material gefüllt sein, welches nicht ferromagnetisch bzw. zumindest weniger ferromagnetisch ist als das Material des Zwischenelements. Auf diese Weise kann eine definierte Leitung des Magnetfeldes im Zwischenelement und damit zwischen Stator und Anker in diesem Bereich erfolgen. Hierdurch kann gezielt auf die Ausbildung der Magnetfeldlinien Einfluss genommen werden.

Gemäß einem weiteren Aspekt der vorliegenden Erfindung ist der mindestens eine Permanentmagnet senkrecht zur Richtung der Längsachse innerhalb der mindestens einen Spule angeordnet. Mit anderen Worten ist der Permanentmagnet bzw. sind die beiden Permanentmagnete radial bzw. in Querrichtung innerhalb der Spule angeordnet. Dies kann den magnetischen Fluss zwischen Stator und Anker begünstigen.

Gemäß einem weiteren Aspekt der vorliegenden Erfindung ist der Anker frei von Permanentmagneten und Spulen. Der Anker kann deshalb besonders leicht und bzw. oder klein ausgebildet sein. Das Magnetfeld des Linearaktors wird außerdem ausschließlich von dem Stator verursacht. Wird das Hydrolager in dieser Ausgestaltung des Linearaktors mit hochfrequenten Schwingungen beaufschlagt, wirken diese über die Steuermembran auf den Anker, der aufgrund seiner verringerten Masse einer derartigen hochfrequenten Schwingung folgen kann. Das Hydrolager in einer derartigen Ausbildung eignet sich deshalb besonders gut zur Isolation von hochfrequenten Schwingungen.

Gemäß einem weiteren Aspekt der vorliegenden Erfindung weist das Leitelement einen sich in der Richtung der Längsachse des Linearaktors erstreckenden Längsabschnitt, einen sich senkrecht zur Richtung der Längsachse des Linearaktors erstreckenden, unteren Kragen und einen sich senkrecht zur Richtung der Längsachse des Linearaktors erstreckenden, oberen Kragen auf. Der untere Kragen ist von dem oberen Kragen in der Richtung der Längsachse beabstandet. Bevorzugt weist das Leitelement also einen oberen Kragen und einen unteren Kragen sowie einen sich zwischen den Kragen erstreckenden Längsabschnitt auf. Grundsätzlich kann sich der Längsabschnitt in der Richtung der Längsachse über die Kragen hinaus erstrecken. Es ist jedoch bevorzugt, dass der Längsabschnitt in Richtung der Längsachse mit dem jeweiligen Kragen endet. Somit ist das Leitelement im Querschnitt vorzugsweise C-förmig oder kammförmig ausgebildet. Es eignet sich deshalb dazu, den mindestens einen Permanentmagneten und bzw. oder die mindestens eine Spule zu übergreifen.

Um die jeweiligen, von dem oberen Kragen und unteren Kragen gebildeten Enden des Leitelements für ein Magnetfeld zu schließen, ist der Anker aus ferromagnetischen Material und in Richtung der Längsachse als Joch für das Leitelement ausgebildet. Der Anker wird bei einer Bestromung der mindestens einen Spule des Stators in Richtung der Längsachse in den Hohlraum des Stators gezogen. Für die Ausgestaltung des Leitelements mit Kragen ist die Zugbewegung des Ankers auf eine konstruktive Überlagerung des von der mindestens einen Spule verursachten Spulenmagnetfelds und des Permanentmagnetfelds am oberen Kragen und einer destruktiven Überlagerung des Spulenmagnetfelds und des Permanentmagnetfelds am unteren Kragen zurückzuführen, oder umgekehrt. Die Kraftwirkung beruht also darauf, dass der Anker in Richtung der Längsachse ein Joch aus ferromagnetischen Material für das Leitelement ausbildet und das Spulenmagnetfeld von dem Permanentmagnetfeld an einem der Kragen geschwächt und an dem anderen Kragen gestärkt wird. Somit ist es wesentlich, dass der Anker aus ferromagnetischem Material ist, um ein Joch zwischen dem oberen Kragen des Leitelements und dem unteren Kragen des Leitelements zu bilden.

Gemäß einem weiteren Aspekt der vorliegenden Erfindung sind die beiden Permanentmagnete zwischen dem unteren Kragen und dem oberen Kragen angeordnet. Auf diese Weise kann der magnetische Fluss von oben und unten mit den beiden Permanentmagneten wirken.

Gemäß einem weiteren Aspekt der vorliegenden Erfindung erstreckt sich das Joch in der Richtung der Längsachse von einem unteren Steg über einen Mittenabschnitt zu einem oberen Steg, wobei jeder der Stege den Mittenabschnitt senkrecht zur Richtung der Längsachse überragt. Mit dieser Ausgestaltung des Ankers werden die in das Joch induzierten Magnetfelder ebenfalls C-förmig gebündelt. In der Praxis hat sich herausgestellt, dass mit einer derartigen Bündelung besonders große Kräfte in Richtung der Längsachse des Ankers erreicht werden können. Korrespondierend kann der Anker kompakter ausgestaltet werden, um eine gleich große Kraft, beispielsweise auf die Steuermembran des Hydrolagers, aufbringen zu können. Mit einer kompakteren Ausgestaltung des Ankers vergrößert sich darüber hinaus die erste Systemeigenfrequenz, so dass ein derartiger Linearaktor eine noch weiter erhöhte Resonanzfrequenz aufweist. Das Hydrolager mit einem derartigen Linearaktor eignet sich deshalb zur effektiven Isolation von noch hochfrequenteren Schwingungen.

Gemäß einem weiteren Aspekt der vorliegenden Erfindung erstreckt sich das Joch in der Richtung der Längsachse mit einem gleichbleibenden Maß senkrecht zur Richtung der Längsachse erstreckt. Mit anderen Worten ist der Joch in der Richtung der Längsachse mit einer gleichbleibenden Außenkontur ausgebildet, welche vorzugsweise zylindrisch ist. Hierdurch kann ein einfach, günstig und bzw. oder schnell herzustellender Joch-Körper geschaffen werden.

Gemäß einem weiteren Aspekt der vorliegenden Erfindung ist der Anker mittels einer Gleitlagerung gelagert. Die Gleitlagerung ermöglicht, dass der Anker in Richtung der Längsachse des Stators gleiten kann. Unter der Gleitlagerung kann also auch ein Gleitlager verstanden werden. Anders als bei den aus dem Stand der Technik bekannten Membranfedern zur Lagerung des Ankers sind für eine Gleitlagerung keine von dem Anker radial nach außen tragende Arme notwendig, die an dem Stator befestigt sind. Der Anker kann also einen besonders kleinen Querschnitt aufweisen, ohne dass über seine radial außenseitigen Wandung Elemente hervorragen, die zur Kollision mit anderen Bauteilen des Linearaktors oder wenn der Linearaktor für ein Hydrolager verwendet wird, zu einer Kollision mit Bauteilen des Hydrolagers neigen. Mit anderen Worten sind an dem Anker keine armähnlichen Elemente angebracht, die eine Hubbewegung des Ankers ungewollt bremsen.

Bei der Gleitlagerung ist darüber hinaus festzuhalten, dass ein Gleitwiderstand unabhängig von der Auslenkung des Ankers in Richtung der Längsachse relativ zum Stator ist. Das bedeutet, dass der Anker auch einen großen Hub ausführen kann, ohne dass es zu proportional erhöhten Reaktionskräften kommt, die ausschließlich vom Anker hervorgerufen werden. Hierbei bleiben zunächst die Reaktionskräfte außer Betracht, die beispielsweise bei der Verwendung für ein Hydrolager von einer zugehörigen Steuermembran ausgehen können. Der Linearaktor mit der Gleitlagerung des Ankers weist deshalb keine auslenkungsabhängige Steifigkeit auf. Somit sind für den Aktor keine Kraftreserven konstruktiv vorzuhalten, um eine größere Auslenkung des Ankers auszuführen. Deshalb kann ein derartiger Aktor eine besonders kleine Bauform aufweisen. In der Praxis wurde außerdem festgestellt, dass ein Gleitlager eine höhere Lebensdauer als eine Membranfeder zur Lagerung des Ankers aufweist.

Gemäß einem weiteren Aspekt der vorliegenden Erfindung ist die Gleitlagerung zumindest im Wesentlichen frei von ferromagnetischem Material. Dies gilt insbesondere für die Teile der Gleitlagerung, die nicht von dem Anker und/oder dem Stator gebildet sind. Indem zumindest die übrigen Teile der Gleitlagerung frei von ferromagnetischem Material sind, können diese auch keinen negativen Einfluss bei einem Auslenken des Ankers relativ zu dem Stator hervorrufen. Insbesondere gehen von nicht ferromagnetischen Materialien keine Rückstellkräfte aus, die auf einer magnetischen Wechselwirkung beruhen. Somit ist ein derartiger Aktor besonders präzise steuerbar.

Gemäß einem weiteren Aspekt der vorliegenden Erfindung ist die Gleitlagerung über das Zwischenelement mit dem Stator feststehend verbunden. Auf diese Weise kann eine sichere Halterung mittels des Zwischenelements anstelle z.B. der Permanentmagnete geschaffen werden, welche hierfür z.B. aufgrund der Sprödheit ihres Materials weniger geeignet sein können. Diese Verbindung bzw. Halterung kann stoffschlüssig z.B. mittels Klebung und bzw. oder formschlüssig z.B. mittels Steck-, Schnapp- oder Schraubverbindung erfolgen.

Die vorliegende Erfindung betrifft auch ein Kraftfahrzeug mit einem Fahrzeugrahmen, einem Motor und einem Motorlager, das eine lagernde Verbindung zwischen dem Motor und dem Fahrzeugrahmen herstellt. Das Kraftfahrzeug ist dadurch gekennzeichnet, dass das Motorlager ein Hydrolager wie zuvor beschrieben ist. Auf diese Weise können die Eigenschaften und Vorteile des erfindungsgemäßen elektromagnetischen Hydrolagers bei einem Kraftfahrzeug angewendet werden.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematisch Querschnittsansicht eines erfindungsgemäßen Hydrolagers zur Kombination mit einem Linearaktor gemäß der Figuren 2-4.
- Fig. 2: eine schematische Querschnittsansicht einer ersten Ausgestaltung eines elektromagnetischen Linearaktors,
- Fig. 3: eine schematische Querschnittsansicht einer zweiten Ausgestaltung eines elektromagnetischen Linearaktors, und
- Fig. 4: eine schematische Querschnittsansicht einer dritten Ausgestaltung eines elektromagnetischen Linearaktors.

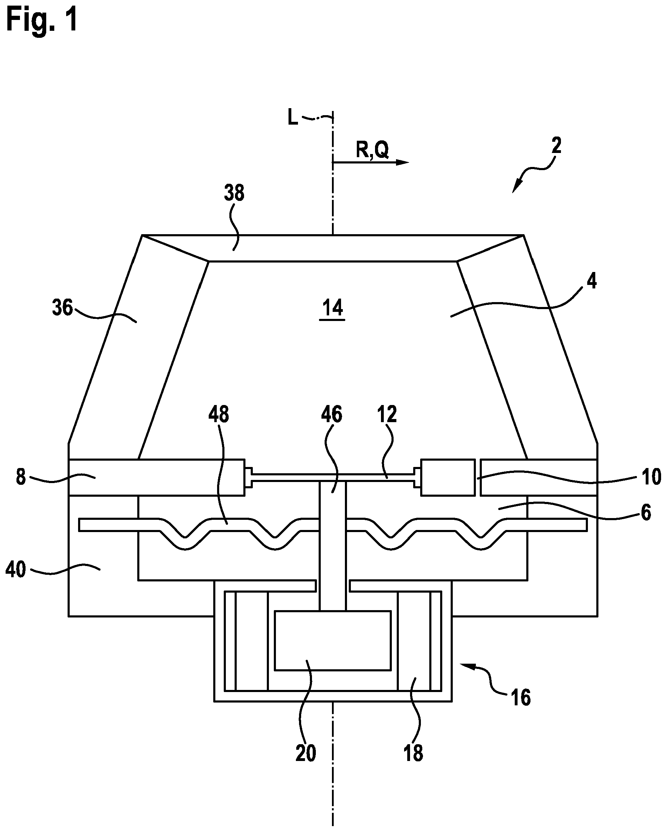

Aus der Figur 1 ist ein Hydrolager 2 zu erkennen. Das Hydrolager 2 umfasst eine als Gummielement ausgestaltete Tragfeder 36. Diese Tragfeder 36 ist für gewöhnlich als Hohlkörper ausgebildet, wobei die Oberseite der Tragfeder 36 eine Abdeckung 38 aufweist. An der Abdeckung 38 ist zumeist ein Anschlusselement (nicht dargestellt) zur Befestigung eines Motors angebracht. In einer einfachen Ausgestaltung handelt es sich bei dem Anschlusselement um einen Gewindebolzen, der mit dem Motor verschraubt werden kann. An der Unterseite der Tragfeder 36 schließt die Trennwand 8 an. Zwischen der Tragfeder 36, der Abdeckung 38 und der Trennwand 8 bildet sich die Arbeitskammer 4 aus. Die Arbeitskammer 4 ist mit einer Hydraulikflüssigkeit gefüllt. Hierbei handelt es sich vorzugsweise um ein Gemisch aus Öl und Wasser. In der Richtung der Längsachse L unterhalb der Trennwand 8 schließt das hohlzylindrische Basisgehäuse 40 an, dessen Innenraum durch einen flexiblen Trennkörper 48 unterteilt ist. Der von der Trennwand 8, dem Trennkörper 48 und dem Basisgehäuse 40 eingeschlossene Raum bildet die Ausgleichskammer 6 des Hydrolagers 2. Die Ausgleichskammer 6 ist bevorzugt ebenfalls mit Hydraulikflüssigkeit gefüllt. Sie kann ebenfalls ein Gemisch aus Öl und Wasser sein.

Aus der Figur 1 ist somit zu entnehmen, dass die Trennwand 8 zwischen der Arbeitskammer 4 und der Ausgleichskammer 6 angeordnet ist. Zur Dämpfung von niederfrequenten Schwingungen, die von dem Motor über die Abdeckung 38 auf die Tragfeder 36 und somit auch auf ein Arbeitskammervolumen 14 der Arbeitskammer 4 wirken, ist ein zwischen der Arbeitskammer 4 und der Ausgleichskammer 6 ausgebildeter Drosselkanal 10 zum Austausch von Hydraulikflüssigkeit vorgesehen. Wird die Tragfeder 36 durch die Schwingungen gestaucht, führt dies zumeist zu einer Erhöhung des Drucks der Hydraulikflüssigkeit in der Arbeitskammer 4 und bzw. oder zu einer Verkleinerung des Arbeitskammervolumens 14 der Arbeitskammer 4. In beiden Alternativen erfolgt dabei ein Volumenstrom der Hydraulikflüssigkeit aus der Arbeitskammer 4 durch den Drosselkanal 10 in die Ausgleichskammer 6. Dabei entsteht in dem Drosselkanal 10 Dissipation, so dass die auf die Tragfeder 36 einwirkenden Schwingungen gedämpft werden können. Die Dämpfung mittels des Drosselkanals 10 ist jedoch nur für niederfrequentierte Schwingungen effektiv. Bei höherfrequenten Schwingungen, so beispielsweise ab 20 Hz, werden Schwingungen durch den Drosselkanal 10 so gut wie gar nicht gedämpft oder isoliert.

Zur Isolation von Schwingungen mit einer Frequenz von mehr als 20 Hz weist das Hydrolager 2 eine Steuermembran 12 auf. Diese Steuermembran 12 ist der Trennwand 8 zugeordnet. Die Steuermembran 12 kann dazu von Trennwand 8 selbst gebildet sein oder in die Trennwand 8 eingebracht sein. So kann die Trennwand 8 die Steuermembran 12 einfassen. Die Steuermembran 12 ist in der Richtung der Längsachse L des Hydrolagers 2 elastisch verformbar ausgestaltet. Entsprechend ihrer elastischen Verformbarkeit in der Richtung der Längsachse L vergrößert oder verkleinert sich das Arbeitskammervolumen 14 der Arbeitskammer 4.

Diese Verformbarkeit der Steuermembran 12 wird vorteilhaft genutzt, um höherfrequente Schwingungen zu isolieren. Dazu ist die Steuermembran 12 an ihrer von der Arbeitskammer 4 abgewandten Seite mechanisch mit einem Anker 20 eines elektromagnetischen Linearaktors 16 des Hydrolagers 2 verbunden. Der Linearaktor 16 weist außerdem einen Stator 18 auf, zudem der Anker 20 beweglich gelagert angeordnet ist. Der Anker ist an dem Basisgehäuse 40 des Hydrolagers 2 befestigt oder von dem Basisgehäuse 40, zumindest teilweise, gebildet. Um die Bewegungsrichtung des Ankers 20 auf eine Bewegungsrichtung in der Richtung der Längsachse L zu beschränken, weist der Linearaktor 16 eine entsprechende Lagerung auf. Somit ist es möglich, mittels des elektromagnetischen Linearaktors 16 die elastische Verformung der Steuermembran 12 elektrisch zu steuern.

Außerdem ist aus der Figur 1 zu erkennen, dass der Anker 20 mittels eines mechanischen Stößels 46, der dem Anker 20 zugeordnet ist, mit der Steuermembran 12 mechanisch verbunden ist. Durch den Stößel kann der Stator 18 des Linearaktors 16 von der Steuermembran 12 beabstandet angeordnet sein, so dass sich in dem Bereich zwischen dem Stator 18 und der Trennwand 8 die Ausgleichskammer 6 ausbilden kann. Eine derartige Ausgestaltung des Hydrolagers 2 hat sich in der Praxis als besonders zweckmäßig erwiesen. Anderweitige Ausbildungen, die ohne einen Stößel 46 oder anstatt des Stößels 46 eine andere Gelenksmechanik zur Übertragung von Kräften des Linearaktors 16 auf die Steuermembran 12 aufweisen, sollen jedoch ebenfalls als eine mechanische Verbindung zwischen dem Anker 20 und der Steuermembran 12 angesehen werden.

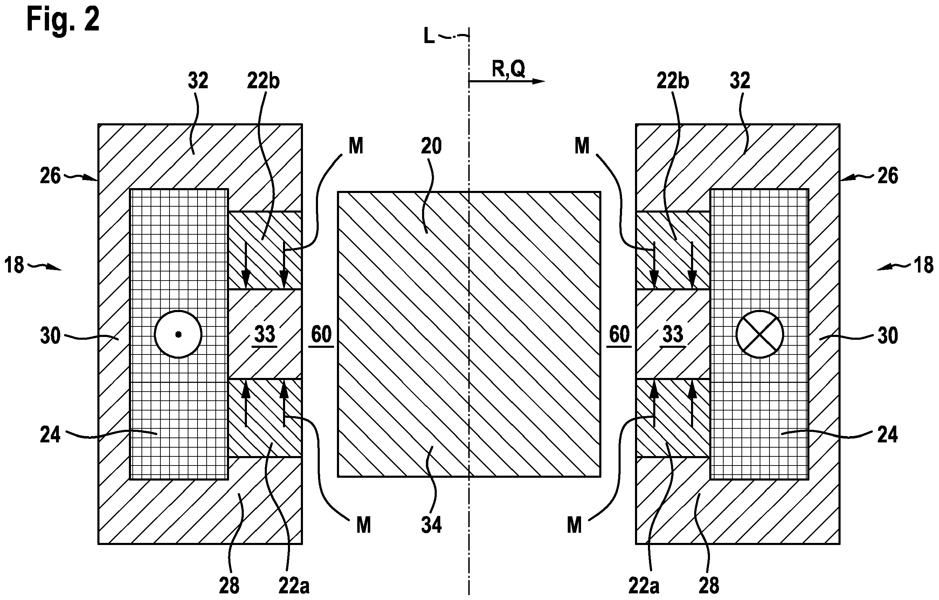

In der Figur 2 ist eine Ausgestaltungsvariante des elektromechanischen Linearaktors 16 detaillierter dargestellt. In einer derartigen Ausgestaltung kann der Linearaktor 16 auch für andere Zwecke und bzw. oder Vorrichtungen, beispielsweise eine Fahrwerklager, Anwendung finden. Der Linearaktor 16 umfasst einen Stator 18, welcher innerhalb eines Statorgehäuses angeordnet ist (nicht dargestellt). Der Linearaktor 16 umfasst ferner ein Paar von Permanentmagneten 22a, 22b und einer Spule 24. Der Linearaktor 16 ist symmetrisch zur Längsachse L ausgebildet. Die weiteren Erläuterungen beziehen sich deshalb zunächst auf die rechte Hälfte des Linearaktors 16. Aufgrund der Symmetrie weist der Linearaktor 16 an seiner gegenüberliegenden Hälfte analoge Merkmale, Ausgestaltungen und bzw. oder Vorteile auf.

In der Richtung der Längsachse L betrachtet, weist der Linearaktor 16 einen unteren Permanentmagneten 22a und einen oberen Permanentmagneten 22b auf. Zwischen dem unteren Permanentmagneten 22a und dem oberen Permanentmagneten 22b ist ein Zwischenelement 33 aus ferromagnetischen Material angeordnet. Radial außenseitig zu den beiden Permanentmagneten 22a, 22b und dem Zwischenelement 33 ist eine Spule 24 angeordnet. Radial außenseitig zur Spule 24 ist ein Längsabschnitt 30 eines Leitelements 26 aus ferromagnetischen Material angeordnet. Das Leitelement 26 ist ein Teil des Stators 18.

Das Leitelement 26 dient in Kombination mit dem Zwischenelement 33 zur Bündelung eines Spulenmagnetfelds der Spule 24. Dazu weist das Leitelement 26 außerdem einen unteren Kragen 28 und einen oberen Kragen 32 auf, die sich jeweils von dem Längsabschnitt 30 in Querrichtung Q erstrecken. Wie aus der Figur 2 hervorgeht, greift der untere Kragen 28 von unten um die Spule 24 herum unter den unteren Permanentmagneten 22a. Der obere Kragen 32 greift hingegen von oben um die Spule 24 herum über den oberen Permanentmagneten 22b. Durch den Längsabschnitt 30 und die beiden Kragen 28, 32 ist das Leitelement 26 kammförmig ausgebildet. Mit der entsprechenden Öffnung zwischen den beiden Kragen 28, 32 übergreift das Leitelement 26 die Spule 24. Mit ihren äußeren L-förmigen Abschnitten, die jeweils einen der beiden Kragen 28, 32 und ein jeweils angrenzendes Ende des Längsabschnitts 30 umfassen, übergreift das Leitelement 26 die beiden Permanentmagneten 22a, 22b.

Der Anker 20 aus ferromagnetischen Material bildet ein Joch 34 für das Zwischenelement 33. Hierzu bedarf der Anker 20 weder eines Permanentmagneten noch einer Spule. Der Anker 20 ist deshalb frei von Permanentmagneten und bzw. oder Spulen. Der Anker 20 besteht in dem ersten Ausführungsbeispiel der Figur 2 aus einem zylindrischen Körper mit in der Richtung der Längsachse L gleichbleibenden Außenmaßen, d.h. einer durchgängigen zylindrischen radialen Oberfläche, über die sich der magnetische Kreis über einen Luftspalt 60 radial schließen kann.

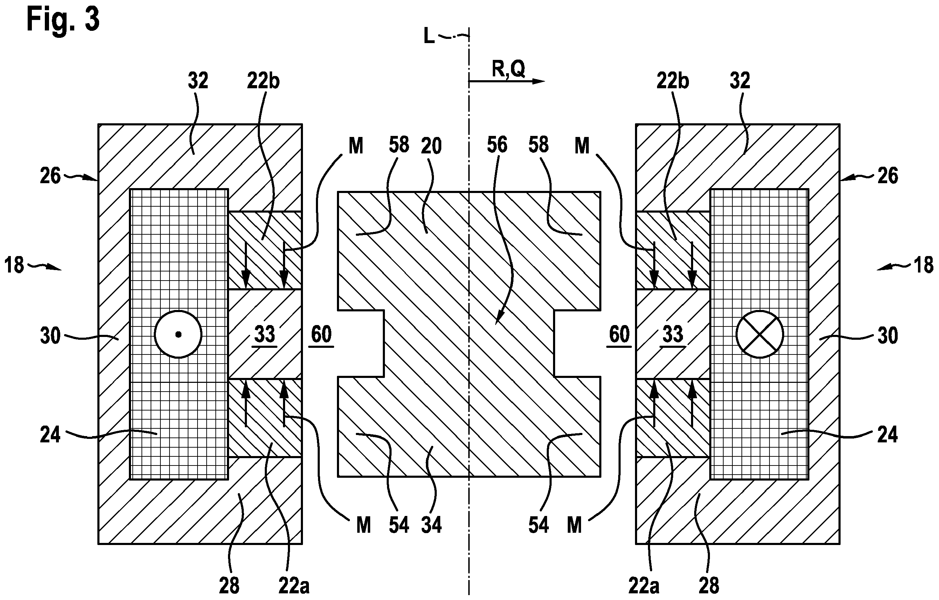

In der Praxis hat es sich als zweckmäßig erwiesen, wenn sich das vom Anker 20 gebildete Joch 34 in Richtung der Längsachse L von einem unteren Steg 54 über einen Mittenabschnitt 56 zu einem oberen Steg 58 erstreckt, wie im zweiten Ausführungsbeispiel der Figur 3 dargestellt. Jeder der beiden Stege 54 ragt dabei in der Querrichtung Q, d.h. in der radialen Richtung R, über den Mittenabschnitt 56 hervor. In einer Ruheposition des Ankers 20 ist der obere Steg 58 gegenüberliegend zu dem oberen Kragen 32 und der untere Steg 54 gegenüberliegend zu dem unteren Kragen 28 ausgerichtet. Mit anderen Worten sind der obere Steg 58 und der obere Kragen 32 in einer gemeinsamen, oberen Ebene und der untere Steg 54 und der untere Kragen 28 in einer gemeinsamen unteren Ebene angeordnet. Die Stege 54, 58 und die Kragen 28, 32 bestimmen somit den Luftspalt 60, der zwischen dem Anker 20 und dem Stator 18 in Querrichtung Q ausgebildet ist.

Um zu gewährleisten, dass der Anker 20 die gewünschte Bewegung ausschließlich in Richtung der Längsachse L ausführt, ist der Anker 20 an seiner Oberseite durch eine obere Führungsfeder und an seiner Unterseite durch eine untere Führungsfeder an dem Stator 18 gelagert angeordnet (nicht dargestellt). Die beiden Führungsfeder verhindern, dass der Anker 20 eine Bewegung in Querrichtung Q ausführen kann.

Um eine Auslenkung des Ankers 20 in Richtung der Längsachse L zu bewirken, wird die Spule 24 bestromt. Dabei entsteht ein Spulenmagnetfeld, welches durch das Leitelement 26, das Zwischenelement 33 und das Joch 34 gebündelt wird, so dass kreisförmige Magnetfeldlinien entstehen. Diese führen auch durch die beiden Kragen 28, 34. Benachbart zu den Kragen 28, 32 sind die beiden Permanentmagneten 22a, 22b angeordnet, die jeweils eine gemeinsame Magnetfeldausrichtung M in axialer Richtung, d.h. in der Richtung der Längsachse L, aufweisen. Deshalb wird das gebündelte Spulenmagnetfeld bei einer Bestromung der Spule 24 in dem unteren Kragen 28 durch ein Permanentmagnetfeld des unteren Permanentmagneten 22a konstruktiv überlagert, wohingegen das gebündelte Spulenmagnetfeld in dem oberen Kragen 32 durch ein Permanentmagnetfeld des oberen Permanentmagneten 22b destruktiv überlagert wird, oder umgekehrt. Je nach Ausgestaltung der genannten Überlagerung erfolgt eine Bewegung des Ankers 20 in längsaxiale Richtung L nach oben oder nach unten.

Zur Übertragung dieser Bewegung in Richtung der Längsachse L kann der Anker 20 bei der Verwendung des entsprechenden Linearaktors 16 für ein Hydrolager 2 unmittelbar an der Steuermembran 12 befestigt sein. Dem Anker 20 kann jedoch auch eine Halterung zugeordnet sein, mit der der Anker 20 mechanisch mit der Steuermembran 12 verbunden ist (nicht dargestellt). An diese Halterung können auch Blattfedern radial außenseitig anschließen, die sich bis zu dem Stator 18 erstrecken, um den Anker 20 gegenüber dem Stator 18 zu lagern (nicht dargestellt).

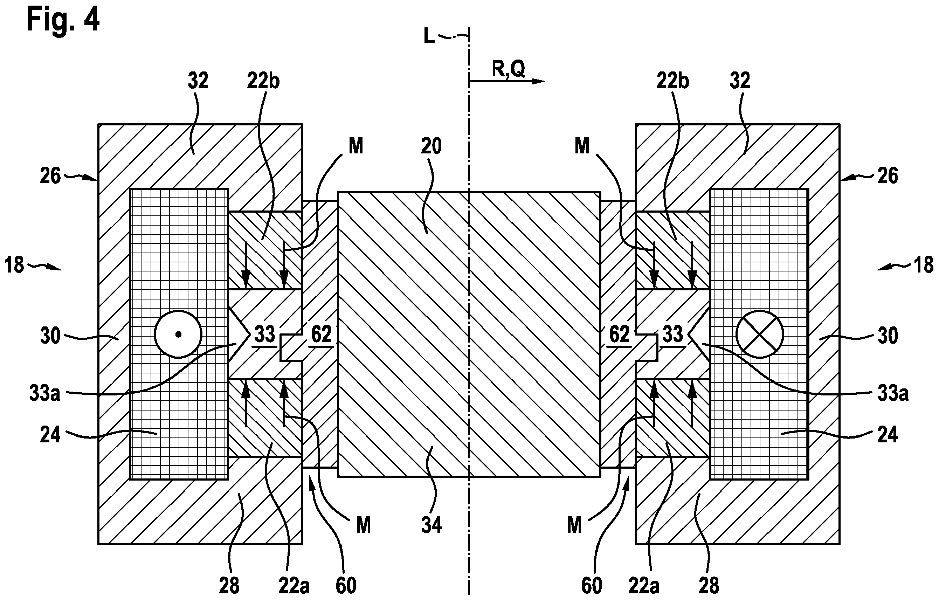

Um die genannte Verlustleistung zu vermeiden oder zumindest deutlich zu verkleinern und zugleich die Bewegungsrichtung des Ankers 20 auf eine Bewegungsrichtung in Richtung der Längsachse L zu beschränken, kann der Anker 20 mittels einer Gleitlagerung 62 gelagert sein, wie im dritten Ausführungsbeispiel der Figur 4 dargestellt. Die Gleitlagerung 62 weist dazu einen Freiheitsgrad in Richtung der Längsachse L auf. Sie kann deshalb Kräfte in Querrichtung Q des Aktors 16 übertragen. Die Gleitlagerung 62 ist dabei über das Zwischenelement 33 mit dem Stator 18 feststehend verbunden. Durch die bevorzugte mechanische Verbindung des Ankers 20 zu der Steuermembran 12 kann eine Führungsgenauigkeit des Ankers in Richtung der Längsachse L weiter verbessert werden, insbesondere wenn die Steuermembran 12 zur Aufnahme von Kräften in Querrichtung Q ausgestaltet ist. Die Gleitlagerung 62 gewährleistet, dass der Anker 20 auch bei einer Auslenkung in Richtung der Längsachse L einen radial außenseitigen Abstand, insbesondere gekennzeichnet durch den Luftspalt 60, zu dem Stator 18 aufweist.

Die Gleitlagerung 62 weist besonders bevorzugt einen sehr kleinen Reibungskoeffizienten auf, so dass eine Verlustleistung, die bei einer Bewegung des Ankers 20 in Richtung der Längsachse L durch die Reibung entsteht, vernachlässigbar klein ist. Unter dieser Annahme sind für den Aktor 16 keine zusätzlichen Leistungsreserven konstruktiv zu berücksichtigen, die sonst bei bekannten Aktoren notwendig wären, um möglichst große Auslenkung in Richtung der Längsachse L auszuführen. Deshalb kann der Aktor 16 insgesamt kompakter und kleiner ausgebildet sein, was zudem eine Gewichtsreduzierung des Aktors 16 beziehungsweise des Hydrolagers 2 bietet.

Das dritte Ausführungsbeispiel der Figur 4 weist ferner eine der Spule 24 zugewandte Aussparung 33a des Zwischenelements 33 auf, welche als dreieckige Einkerbung 33a ausgebildet ist. Die Aussparung 33a ist als luftgefüllter Hohlraum ausgebildet. Auf diese Weise kann eine definierte Leitung des Magnetfeldes im Zwischenelement 33 und damit zwischen Stator 18 und Anker 20 in diesem Bereich erfolgen.

### Bezugszeichenliste (Teil der Beschreibung)

- L: Längsachse
- M: Richtung der Magnetisierung der Permanentmagnete 22a, 22b
- Q: Querrichtung
- R: radiale Richtung

- 2: Hydrolager
- 4: Arbeitskammer
- 6: Ausgleichskammer
- 8: Trennwand
- 10: Drosselkanal
- 12: Steuermembran
- 14: Arbeitskammervolumen
- 16: Linearaktor
- 18: Stator
- 20: Anker
- 22a: unterer Permanentmagnet
- 22b: oberer Permanentmagnet
- 24: Spule
- 26: Leitelement
- 28: unterer Kragen
- 30: Längsabschnitt
- 32: oberer Kragen
- 33: Zwischenelement
- 33a: Aussparung bzw. dreieckige Einkerbung des Zwischenelements 33
- 34: Joch
- 36: Tragfeder
- 38: Abdeckung
- 40: Basisgehäuse
- 46: Stößel
- 48: Trennkörper
- 54: unterer Steg
- 56: Mittenabschnitt
- 58: oberer Steg
- 60: Luftspalt
- 62: Gleitlagerung

## Patentansprüche

1. Hydrolager (2)
mit einem elektromagnetischen Linearaktor (16) mit
einem Stator (18) und
einem zu dem Stator (18) beweglichen Anker (20),
wobei der Stator (18) mindestens einen Permanentmagneten (22a, 22b) und mindestens eine Spule (24) aufweist,
wobei der Stator (18) ein Leitelement (26) aus ferromagnetischem Material aufweist, wobei das Leitelement (26) den mindestens einen Permanentmagneten (22a, 22b) und/oder die mindestens eine Spule (26) übergreift, und
wobei der Anker (20) in der Richtung der Längsachse (L) ein Joch (34) aus ferromagnetischem Material für das Leitelement (26) ausbildet,
**dadurch gekennzeichnet, dass**
der mindestens eine Permanentmagnet (22a, 22b) zumindest im Wesentlichen, vorzugsweise vollständig, in der Richtung der Längsachse (L) magnetisiert ist.

2. Hydrolager (2) gemäß Anspruch 1, mit
einem in der Richtung der Längsachse (L) unteren Permanentmagneten (22a), einem in der Richtung der Längsachse (L) oberen Permanentmagneten (22b), und einem Zwischenelement (33) aus ferromagnetischem Material, welches in der Richtung der Längsachse (L) zwischen den beiden Permanentmagneten (22a, 22b) angeordnet ist.

3. Hydrolager (2) gemäß Anspruch 2,
wobei das Zwischenelement (33) eine der Spule (24) zugewandte Aussparung (33a), vorzugsweise in Form einer dreieckigen Einkerbung (33a), aufweist, welche ausgebildet ist, den magnetischen Fluss wenigstens eines Permanentmagneten (22a; 22b), vorzugsweise beider Permanentmagneten (22a, 22b), zwischen der axialen Richtung der Längsachse (L) und der radialen Richtung (R) bzw. Querrichtung (Q) senkrecht zur Richtung der Längsachse (L) zumindest teilweise umzulenken.

4. Hydrolager (2) gemäß einem der vorhergehenden Ansprüche,
wobei der mindestens eine Permanentmagnet (22a, 22b) senkrecht zur Richtung der Längsachse (L) innerhalb der mindestens einen Spule (24) angeordnet ist.

5. Hydrolager (2) gemäß einem der vorhergehenden Ansprüche,
wobei der Anker (20) frei von Permanentmagneten (22a, 22b) und Spulen (24) ist.

6. Hydrolager (2) gemäß einem der vorhergehenden Ansprüche,
wobei das Leitelement (26) einen sich in der Richtung der Längsachse (L) des Linearaktors (16) erstreckenden Längsabschnitt (30), einen sich senkrecht zur Richtung der Längsachse (L) des Linearaktors (16) erstreckenden, unteren Kragen (28) und einen sich senkrecht zur Richtung der Längsachse (L) des Linearaktors (16) erstreckenden, oberen Kragen (32) aufweist,
wobei der untere Kragen (28) von dem oberen Kragen (32) in der Richtung der Längsachse (L) beabstandet ist.

7. Hydrolager (2) gemäß Anspruch 6,
wobei die beiden Permanentmagnete (22a, 22b) zwischen dem unteren Kragen (28) und dem oberen Kragen (32) angeordnet sind.

8. Hydrolager (2) gemäß einem der vorhergehenden Ansprüche,
wobei sich das Joch (34) in der Richtung der Längsachse (L) von einem unteren Steg (54) über einen Mittenabschnitt (56) zu einem oberen Steg (58) erstreckt, wobei jeder der Stege (54, 58) den Mittenabschnitt (56) senkrecht zur Richtung der Längsachse (L) überragt.

9. Hydrolager (2) gemäß einem der Ansprüche 1 bis 8,
wobei sich das Joch (34) in der Richtung der Längsachse (L) mit einem gleichbleibendem Maß senkrecht zur Richtung der Längsachse (L) erstreckt.

10. Hydrolager (2) nach einem der vorhergehenden Ansprüche,
wobei der Anker (20) mittels einer Gleitlagerung (62) gelagert ist.

11. Hydrolager (2) gemäß Anspruch 10,
wobei die Gleitlagerung (62) zumindest im Wesentlichen frei von ferromagnetischem Material ist.

12. Hydrolager (2) gemäß Anspruch 10 oder 11,
wobei die Gleitlagerung (62) über das Zwischenelement (33) mit dem Stator (18) feststehend verbunden ist.

13. Kraftfahrzeug mit
einem Fahrzeugrahmen,
einem Motor und
einem Motorlager, das eine lagernde Verbindung zwischen dem Motor und dem Fahrzeugrahmen herstellt,
**dadurch gekennzeichnet, dass**
das Motorlager ein Hydrolager (2) nach einem der vorhergehenden Ansprüche ist.

## Claims

1. Hydraulic mount (2)
with an electromagnetic linear actuator (16) having a stator (18) and
an armature (20) which is able to move in relation to the stator (18),
wherein the stator (18) has at least one permanent magnet (22a, 22b) and at least one coil (24),
wherein the stator (18) has a conductive element (26) made of ferromagnetic material,
wherein the conductive element (26) engages over the at least one permanent magnet (22a, 22b) and/or the at least one coil (26), and
wherein the armature (20), in the direction of the longitudinal axis (L), forms a yoke (34) made of ferromagnetic material for the conductive element (26),
**characterized in that**
the at least one permanent magnet (22a, 22b) is at least substantially, preferably completely, magnetized in the direction of the longitudinal axis (L).

2. Hydraulic mount (2) according to Claim 1, having a lower permanent magnet (22a) in the direction of the longitudinal axis (L), an upper permanent magnet (22b) in the direction of the longitudinal axis (L), and an intermediate element (33) made of ferromagnetic material which is arranged between the two permanent magnets (22a, 22b) in the direction of the longitudinal axis (L).

3. Hydraulic mount (2) according to Claim 2,
wherein the intermediate element (33) has a cutout (33a), preferably in the form of a triangular notch (33a), which faces towards the coil (24) and which is configured to at least partially redirect the magnetic flux of at least one permanent magnet (22a; 22b), preferably of both permanent magnets (22a, 22b), between the axial direction of the longitudinal axis (L) and the radial direction (R) or transverse direction (Q) perpendicularly with respect to the direction of the longitudinal axis (L).

4. Hydraulic mount (2) according to one of the preceding claims,
wherein the at least one permanent magnet (22a, 22b) is arranged perpendicularly with respect to the direction of the longitudinal axis (L) within the at least one coil (24).

5. Hydraulic mount (2) according to one of the preceding claims,
wherein the armature (20) is free of permanent magnets (22a, 22b) and coils (24).

6. Hydraulic mount (2) according to one of the preceding claims,
wherein the conductive element (26) has a longitudinal portion (30) which extends in the direction of the longitudinal axis (L) of the linear actuator (16), a lower collar (28) which extends perpendicularly with respect to the direction of the longitudinal axis (L) of the linear actuator (16), and an upper collar (32) which extends perpendicularly with respect to the direction of the longitudinal axis (L) of the linear actuator (16), wherein the lower collar (28) is spaced apart from the upper collar (32) in the direction of the longitudinal axis (L).

7. Hydraulic mount (2) according to Claim 6,
wherein the two permanent magnets (22a, 22b) are arranged between the lower collar (28) and the upper collar (32).

8. Hydraulic mount (2) according to one of the preceding claims,
wherein the yoke (34) extends in the direction of the longitudinal axis (L) from a lower web (54), over a middle portion (56), to an upper web (58), wherein each of the webs (54, 58) protrudes over the middle portion (56) perpendicularly with respect to the direction of the longitudinal axis (L).

9. Hydraulic mount (2) according to one of Claims 1 to 8,
wherein the yoke (34) extends, in the direction of the longitudinal axis (L), with a constant extent perpendicularly with respect to the direction of the longitudinal axis (L).

10. Hydraulic mount (2) according to one of the preceding claims,
wherein the armature (20) is supported by means of a plain bearing (62).

11. Hydraulic mount (2) according to Claim 10,
wherein the plain bearing (62) is at least substantially free of ferromagnetic material.

12. Hydraulic mount (2) according to Claim 10 or 11,
wherein the plain bearing (62) is fixedly connected to the stator (18) by way of the intermediate element (33).

13. Motor vehicle having
a vehicle frame,
an engine and
an engine mount which produces a supporting connection between the engine and the vehicle frame,
**characterized in that**
the engine mount is a hydraulic mount (2) according to one of the preceding claims.

## Revendications

1. Palier hydraulique (2) comprenant un actionneur linéaire électromagnétique (16) avec un stator (18) et un induit (20) déplaçable par rapport au stator (18), le stator (18) présentant au moins un aimant permanent (22a, 22b) et au moins une bobine (24), le stator (18) présentant un élément conducteur (26) en matériau ferromagnétique, l'élément conducteur (26) venant en prise pardessus l'au moins un aimant permanent (22a, 22b) et/ou l'au moins une bobine (26), et l'induit (20) constituant, dans la direction de l'axe longitudinal (L), une culasse (34) en matériau ferromagnétique pour l'élément conducteur (26),
**caractérisé en ce que**
l'au moins un aimant permanent (22a, 22b) est au moins essentiellement, de préférence complètement magnétisé dans la direction de l'axe longitudinal (L).

2. Palier hydraulique (2) selon la revendication 1, comprenant un aimant permanent inférieur (22a) dans la direction de l'axe longitudinal (L), un aimant permanent supérieur (22b) dans la direction de l'axe longitudinal (L) et un élément intermédiaire (33) en matériau ferromagnétique qui est disposé dans la direction de l'axe longitudinal (L) entre les deux aimants permanents (22a, 22b).

3. Palier hydraulique (2) selon la revendication 2, dans lequel l'élément intermédiaire (33) présente un évidement (33a) tourné vers la bobine (24), de préférence en forme d'entaille triangulaire (33a), qui est réalisé de manière à dévier au moins en partie le flux magnétique d'au moins un aimant permanent (22a ; 22b), de préférence des deux aimants permanents (22a, 22b) entre la direction axiale de l'axe longitudinal (L) et la direction radiale (R) ou la direction transversale (Q) perpendiculairement à la direction de l'axe longitudinal (L).

4. Palier hydraulique (2) selon l'une quelconque des revendications précédentes, dans lequel l'au moins un aimant permanent (22a, 22b) est disposé perpendiculairement à la direction de l'axe longitudinal (L) à l'intérieur de l'au moins une bobine (24).

5. Palier hydraulique (2) selon l'une quelconque des revendications précédentes, dans lequel l'induit (20) est exempt d'aimants permanents (22a, 22b) et de bobines (24).

6. Palier hydraulique (2) selon l'une quelconque des revendications précédentes, dans lequel l'élément conducteur (26) présente une portion longitudinale (30) s'étendant dans la direction de l'axe longitudinal (L) de l'actionneur linéaire (16), un rebord inférieur (28) s'étendant perpendiculairement à la direction de l'axe longitudinal (L) de l'actionneur linéaire (16) et un rebord supérieur (32) s'étendant perpendiculairement à la direction de l'axe longitudinal (L) de l'actionneur linéaire (16), le rebord inférieur (28) étant espacé du rebord supérieur (32) dans la direction de l'axe longitudinal (L).

7. Palier hydraulique (2) selon la revendication 6, dans lequel les deux aimants permanents (22a, 22b) sont disposés entre le rebord inférieur (28) et le rebord supérieur (32).

8. Palier hydraulique (2) selon l'une quelconque des revendications précédentes, dans lequel la culasse (34) s'étend dans la direction de l'axe longitudinal (L) depuis une branche inférieure (54) par le biais d'une portion centrale (56) jusqu'à une branche supérieure (58), chacune des branches (54, 58) saillant depuis la portion centrale (56) perpendiculairement à la direction de l'axe longitudinal (L).

9. Palier hydraulique (2) selon l'une quelconque des revendications 1 à 8, dans lequel la culasse (34) s'étend dans la direction de l'axe longitudinal (L) avec une dimension uniforme perpendiculairement à la direction de l'axe longitudinal (L).

10. Palier hydraulique (2) selon l'une quelconque des revendications précédentes, dans lequel l'induit (20) est supporté au moyen d'un support sur palier lisse (62).

11. Palier hydraulique (2) selon la revendication 10, dans lequel le support sur palier lisse (62) est au moins essentiellement exempt de matériau ferromagnétique.

12. Palier hydraulique (2) selon la revendication 10 ou 11, dans lequel le support sur palier lisse (62) est connecté fixement au stator (18) par le biais de l'élément intermédiaire (33).

13. Véhicule automobile comprenant un châssis de véhicule, un moteur et un palier de moteur qui établit une liaison de support sur palier entre le moteur et le châssis de véhicule, **caractérisé en ce que** le palier de moteur est un palier hydraulique (2) selon l'une quelconque des revendications précédentes.
